# EUROPEAN PATENT SPECIFICATION

(11) **EP 3 722 727 B1**
(45) Date of publication and mention of the grant of the patent: **09.04.2025**
(21) Application number: 18885834.4
(22) Date of filing: 05.12.2018
(51) Int. Cl.: F28D 20/02, F28F 13/00

(54) **THERMAL-VAPOUR-COMPRESSION MULTI-EFFECT DISTILLATION (TVC-MED) ARRANGEMENT HAVING A LOW COMPRESSION RATIO**
MULTIEFFEKTDESTILLATION MIT THERMODAMPFKOMPRESSION (TVC-MED) MIT NIEDRIGEM VERDICHTUNGSVERHÄLTNIS
INSTALLATION MED-TVC À FAIBLE TAUX DE COMPRESSION

(30) Priority: 04.12.2018 WO PCT/ES2018/070781; 04.12.2018 WO PCT/ES2018/070782; 05.12.2017 ES 201731494 U; 13.12.2017 ES 201731521 U; 19.12.2017 ES 201731548 U
(43) Date of publication of application: 14.10.2020
(73) Proprietor: Nomen Calvet, Juan Eusebio, L'Aldosa AD400 (AD); Hanganu, Dan Alexandru, 08294 El Bruc (Barcelona) (ES); WGA WATER GLOBAL ACCESS, S.L., Sispony AD400 (AD)
(72) Inventor: NOMEN CALVET, Juan Eusebio, L'Aldosa AD400 (AD); HANGANU, Dan Alexandru, 08294 El Bruc Barcelona (ES)
(74) Representative: Elion IP, S.L.
(86) International application number: PCT/ES2018/070786
(87) International publication number: WO 2019/110863

(56) References cited:
- WO-A1-2005/100252
- CN-U- 202 936 219
- CN-U- 206 481 096
- GB-A- 2 443 802
- JP-A- 2013 088 049
- US-A1- 2006 225 863
- US-A1- 2017 030 656

## Description

### OBJECT

The present invention relates to a multi-effect distillation MED desalination arrangement with thermal vapour compression, MED-TVC, with low compression ratio and high GOR. CN 202 936 219 U, GB 2 443 802 A and WO 2005/100252 A1 disclose desalination arrangements according to the state of the art.

### STATE OF THE ART

Current multi-effect distillation MED desalination devices release latent condensation heat from the last effect into a heat sink, so that this energy is transformed into an increase in sensible heat of the liquid in the heat sink.

Multi-effect distillation MED desalination devices can incorporate at least one thermal vapour compressor or ejector. MEDs with thermal-vapour compression MED-TVC recycle part of the vapour, that is, part of the latent heat, which is recirculated in the system.

A problem with current MED-TVC devices is that they require significant thermal jumps, temperature gradients between effects. The higher the temperature gradient per effect is, the higher the temperature and pressure difference between the vapor of the last effect and the vapor of the first effect, or between intermediate effects. Thus, the ejector positioned to compress vapor from one effect toward another preceding effect will require a higher compression ratio when the temperature differential per effect is greater. A higher compression ratio implies a higher specific consumption of vapour from the ejector, that is, a greater supply of active vapour per unit of mass of pulled vapour. Current MED-TVCs can work between intermediate effects when the pressure difference between the first effect and the last effect is very high. In this case, each intermediate ejector that is incorporated implies a new supply of energy to the system in the form of active vapour.

The state-of-the-art MED devices are configured with temperature differentials or thermal gradients ranging between 3°C and 5°C per effect. MED devices have a working range that is usually between about 70°C in the first effect and about 35°C in the last effect. The upper working limit of 70°C is due to mineral precipitation and scaling that occur above this temperature. The lower working limit of about 35°C is due to the fact that the heat sink uses seawater at ambient temperature and the working temperature of the last effect is limited at around 35°C. In other words, state-of-the-art MEDs usually have a maximum total gradient of around 35°C, although they can use only a part of this potential working gradient.

Between the 70°C of the source and the 35°C of the sink, a MED can incorporate between 7 and 12 effects with a thermal jump per effect of around 3°C or 5°C. Each effect involves a condensation and evaporation cycle, that is, a recycling of energy in the form of heat. This recycling of energy from the MED is diminished, among other factors, by the energy directed to raising the temperature of the saline solution up to working temperature of the first effect that is usually around 70°C.

In current MED-TVCs, the latent heat recycling of the effects of a MED is multiplied by the recycling of the ejector.

The compression ratio of an ejector that covers the pressure difference between effects with a total gradient of 35°C is around 6. Therefore, the performance of this ejector is around 1 kg of pulled vapour for every 4 kg of active, motive steam for a primary vapour with a pressure of around 3 bars. Thus, the recycling potential of the ejector of current MED-TVC systems is around one unit of mass, or one unit of latent heat, for every five units of mass of vapour, or units of latent heat, that circulate in the system This consumption can be reduced a little by using primary vapour at a higher pressure.

In the state of the art there are latent heat exchange tubes of high thermal efficiency based on condensation and capillary evaporation, with microgrooves on the evaporating and condensing faces that allow the latent heat transfer coefficient to be increased above the current paradigm for thin film heat exchangers of around 2,000W / m²K. The elevation of the latent heat transfer coefficient allows the reduction of the temperature gradient per effect. The temperature gradient can be reduced to differentials around 1°C per effect, so that more effects can be interspersed between a heat source, normally at 70°C and a heat sink, usually at around 35°C. But the management of a desalination plant with 30 or 35 effects is very complex and the capital cost is very high.

Solutions for reducing the heat sink temperature, such as gel adsorption technology, are also described in the state of the art. But in this case, the intercalation of more effects between the heat source and the heat sink presents similar problems of management and capital investment and also the additional energy consumption that this methodology implies.

Another problem with current MED-TVC devices is that they ude part of the energy contained in the primary vapour to raise the temperature of the saline solution to be desalinated, from ambient temperature to the working temperature of the first effect, which is usually around 70°C. The transformation of the energy contained in primary vapour to raise the sensible heat of the saline solution to be desalinated reduces the Gained output ratio GOR of the current MED-TVC devices. The GOR of a MED is an expression of the resulting energy recycling and expresses the kg of desalinated water obtained per kg of vapour supplied to the system, or its equivalent.

Since the GOR of a MED device is mainly the result of the combination of the supplied vapour, the thermal jump per effect, the number of effects, the energy used to raising the temperature of the liquid to be evaporated and, in the case of a MED-TVC, the combination of the compression ratio and the expansion ratio of the ejector, the current MED-TVC devices present the problem that their total GOR is limited by the range of working temperatures, by the energy necessary to raise the temperature of the solution to the working temperature of the first effect, by the thermal jump by effect, which limits the number of effects, and by the pressure differential between the first effect and the last effect, which give rise to high compression ratios that increase the specific consumption of vapour and limit the recycling of vapour.

### SUMMARY

The present invention seeks to solve one or more of the problems set forth above, to increase the desalination capacity and to reduce the specific energy cost per unit of desalinated water by means of a low compression ratio MED-TVC desalination arrangement as defined in the claims.

The low compression ratio MED-TVC desalination arrangement uses high-efficiency latent heat exchangers with high coefficients of latent heat exchange through evaporation and capillary condensation such that the heat jump is around 1°C, or less, per effect, instead of the thermal gradient ranging between 3°C and 5°C per effect of the current MED and MED-TVC.

This enhancement of the thermal gradient between effects is used to formulate a new low compression ratio MED-TVC desalination arrangement having the following differentiating characteristics:
- The arrangement reduces the working temperature of the first effect, which allows a reduction of the amount of energy used for raising the temperature of the saline solution to be desalinated, which is provided to the first effect, top brine temperature.
- The reduction of the working temperature of the first effect is associated with the reduction of the working vapor pressure of the first effect, leading thus to a reduction of the compression ratio between the vapour supplied to the first effect and the suction vapour of the last effect, or between intermediate effects, reaching the optimal area of compression ratios around 1 + 0.08 (n-1), or less, for n effects.
- By reducing the compression ratio, we managed to reduce the specific consumption of active vapour supplied to the system per unit of vapour pulled, so that we increased the resulting GOR multiplier factor, reaching the optimal area of specific vapour consumption of around 1 kg, or less than 1 kg, of active vapour per kilo of pulled vapour.
- Since the relationship between compression ratio reduction and specific vapour consumption reduction is not a linear relationship, because it follows a logarithmic curve with a certain initial verticality and a progressive flattening of the curve, so that compression ratio reductions levels up to around 1 + 0.08 (n-1) or less tend to produce notable improvements in the specific consumption of active vapour. Since increasing the number of effects linearly increases vapor recycling, but also linearly increases the temperature differential between the first effect and the heat sink, increasing the compression ratio almost linearly, and given that the relationship between the compression ratio and the specific consumption of vapour follows a logarithmic-like curve in which the increases in the compression ratio, which occur as the number of effects increases, progressively penalizes the specific consumption of vapour until reaching a point where adding one more effect leads to a GOR increase below 1. The design of the low compression ratio MED-TVC desalination arrangement has sufficiently flexible design so that, depending on the availability of financial resources and energy and depending on the objectives of desalinated water production and energy saving, it is possible to combine the optimum level for each case of the number of effects and compression ratio to obtain the production and the resulting GOR according to the needs and capabilities of the user.
- The reduction of the thermal jump per effect allows the reduction of the temperature of the first effect to the desired level depending on the production needs and energy cost, to achieve the best combination of compression ratio and specific consumption of vapour combined with the number of effects. The number of effects will tend to be under around 15 effects because above this number of effects, the addition of one more effect tends to give a resulting GOR with an increase below 1 as a result of the more than linear increase of the specific consumption of vapour.
- Thus, the low compression ratio MED-TVC desalination arrangement allows much higher performance than the MED or MED-TVC arrangements of the state of the art. Specifically, it multiplies the production of desalinated water by 2 or more, reduces to one half, or even less, the specific consumption of energy per unit of water, and the energy used to increasing the temperature of the saline solution supplied to the first effect is reduced to one half or one third, or even less. Thus, the resulting GOR is decisively above the GOR of current MED or MED-TVC devices, reaching GOR increases of around 100%.

This low compression ratio MED-TVC desalination arrangement can be applied to new construction plants or can be applied to pre-existing MED-TVC or MED plants.

### BRIEF DESCRIPTION OF THE FIGURES

A more detailed explanation is given in the description that follows, which is based on the attached figures:
FIG. 1 is a longitudinal section of a multi-effect distillation MED desalination device of the state of the art,
FIG. 2 is a longitudinal section of a multi-effect distillation device with thermal vapour compression MED-TVC of the state-of-the-art;
FIG. 3 is a longitudinal section of the MED-TVC desalination arrangement having a low compression ratio, and
FIG. 4 is a cross section of the wall of an evaporator-condenser tube or chamber in capillary condensation and evaporation regime.

### DESCRIPTION

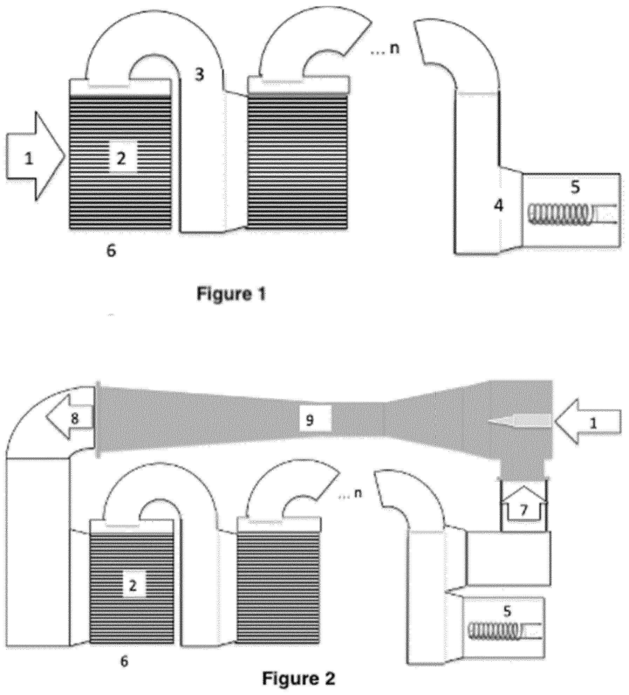

FIG. 1 shows a multi-effect distillation desalination arrangement MED of the state of the art that, in each of the n effects, has a latent heat exchanger 2 of tubes or chambers with supply of saline solution on the evaporating face in descending or ascending thin film regime. The state-of-the-art MED receives vapour from an external vapour source 1, which condenses in the first effect, releasing energy in the form of latent heat of condensation. This energy passes through the wall of the latent heat exchanger, passes through the descending thin film of saline to be desalinated that flows on the evaporating face of said latent heat exchange tubes or chambers, and this energy is absorbed in the form of evaporative heat in the evaporating face. The thermal resistances of the water layers limit the transfer coefficient of the aggregated latent heat of the wall of the state-of-the-art heat exchanger, which is around 2,000W/m²K; that can reach coefficients of about 6,000W/m²K in vertical arrangements. The thermal resistances imposed by the water layers require a temperature differential or loss of 3°C to 5°C, or more, per effect. So within the working range of about 35°C that is between approximately 70°C of the working temperature of the first effect and the working temperature of about 35°C of the last effect, the MED usually incorporates between 7 and 12 effects. There are MED embodiments with fewer effects to reduce the cost of capital and the operational difficulty associated with each effect incorporated in a MED.

The vapour generated in the first effect is supplied to the condensing face of tubes or chambers of the exchanger of the second effect. And so on for n effects, until the vapour generated in the nth effect is supplied 4 to the final condenser 5 or vapour sink, on which it condenses. In the final condenser 5 the latent heat of the vapour is transformed into sensible heat by raising the temperature of the seawater or another source of water to be desalinated that circulates on the inside of the final condenser that acts as a heat sink 5, so that the latent heat from the system is transformed into sensible heat of the liquid in the sink.

FIG. 2 shows a multi-effect distillation device having thermal vapour compression MED-TVC of the state of the art. This state-of-the-art device has the same essential components as a basic state-of-the-art MED as described in FIG. 1, with the addition of the thermocompressor or ejector 9. The thermal vapour compressor of state-of-the-art MED-TVC device usually receives as source of energy 1, residual vapour from a cogeneration plant at a temperature of around 130°C or more and at a pressure of 3 bar or more. This vapour 1 at 3 bar, or more, acts as active or primary, motive vapour; of the state-of-the-art thermocompressor 9. In the configuration shown in FIG. 2, the thermal vapour compressor or ejector pulls cold vapour in form the last effect and supplies warm vapour to the first effect. In the state of the art there are embodiments that pull and supply vapour from and to intermediate effects.

In the embodiment shown in FIG. 2; the pulled vapour 7 is a fraction of the last effect vapour. The sum of the mass of pulled vapour 7 and the mass of active vapour 1 gives rise to a vapour mass 8 that is incorporated into the first effect of the MED-TVC at a temperature that is usually around 70°C and at around 311 mb. In this configuration, the state-of-the-art thermocompressor 9 has a specific vapour consumption of around 4 kg, or more, of active vapour 1 per kg of pulled vapour 7, so that approximately one part of pulled vapour sucked 7 at about 35°C, together with four parts of active vapour 1 at 3 bar, give rise to five parts of vapour 8 at 70°C. Consequently, the vapour of the last effect is divided into five parts, four parts that condense on the last condenser 5 and one part that is pulled 7 by the thermocompressor. In the state of the art, there are embodiments of MED-TVC that do not cover the entire working temperature range of 35 °C between the working temperature of the first effect (70°C ) and the working temperature of the last effect (35°C). In the state of the art, there are embodiments of TVC MED arrangements that incorporate more than one ejector between sequences of effects, and require the corresponding input of energy in the form of active vapour in each ejector.

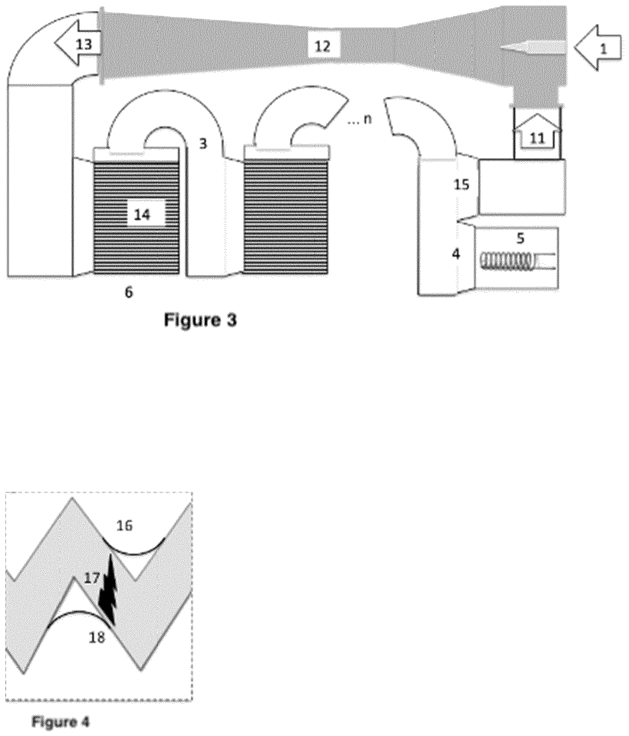

FIG. 3 shows the multi-effect distillation desalination arrangement with thermal compression of vapour MED-TVC having a low compression ratio. The MED-TVC desalination arrangement having a low compression ratio permits to multiply the recycling of vapour and, consequently, of latent heat, which permits to improve the production capacity and reduce the specific energy consumption and has the following specific characteristics that differentiate it from a state-of-the-art MED-TVC arrangement:
- The latent heat exchanger 14 of each of the n effects consists of tubes or evaporator-condenser chambers with the following configuration:
   ∘ The condensing face of these tubes or chambers is covered, at least in part, with microgrooves or another capillary structure on which water vapor condenses in a capillary condensation regime. These microgrooves or other capillary structure have the section, inclination and length necessary so that, taking into account the energy flow and the rate of condensation, the condensed water flows within the capillary structures and leaves a space free of water layers between the end of the meniscus and the end of the microgroove or other capillary structure.
   ∘ The evaporating face of these tubes or chambers is covered, at least in part, by microgrooves or micro undulations on which evaporation occurs from the end of the menisci of the saline solution that flows within the microgrooves or micro undulations. The section, inclination and length of these microgrooves or micro undulations and the flow of saline solution provided within the microgrooves or micro undulations are appropriate so that, taking into account the energy flow and the rate of evaporation along these microgrooves or micro undulations, the saline flow does not dry out and there is a space free of water layers between the end of the meniscus and the end of the microgroove or micro undulations.
   ∘ As shown in FIG. 4, the section of the wall in one configuration of these evaporator-condenser tubes or chambers 14 has the shape of a continuous broken zigzag, crenellated or wavy line so that the heat path 17 is free of water layers between the capillary condensation point on the condensed water menisci 18 that form on the condensing face and the upper end of the saline meniscus 16 where evaporation occurs on the evaporating face.
- The supply of the saline solution on the evaporating face of the tubes or evaporator-condenser chambers of the latent heat exchanger is carried out within the microgrooves or micro undulations on the evaporating face. This supply of saline solution is not carried out in a descending water layer regime, so that the thermal resistance of these water layers does not occur on the wall of the latent heat exchanger. The reduction or elimination of the thermal barriers of the water layers and the thermal efficiency of the capillary condensation and evaporation of the desalination arrangement allow the aggregate coefficient of latent heat transfer of the wall of the latent heat exchanger to be very high. The latent heat transfer coefficient of the latent heat exchangers 14 of the desalination arrangement can exceed 40,000W/m²K.
- The high coefficient of latent heat transfer of the walls of the tubes or condenser-evaporator chambers in the described configuration allows the TVC MED desalination arrangement having a low compression coefficient to require a differential or temperature gradient per effect only ranging between 0.8°C and 0.2°C plus the temperature difference required by the elevation of the boiling point of the saline solution. For seawater, the temperature differential for the elevation of the boiling point is around 0.5 °C, so that the temperature differential per effect with the desalination disposition is low, ranging between 1.3°C and 0.7°C, or less. In other words, temperature differentials of around 1°C, or less, per effect are obtained.
- The desalination arrangement uses at least part of the reduction of the thermal gradient per effect to reduce the working temperature of the first effect, so that the working pressure of the first effect is reduced. Reducing the working temperature of the first effect reduces the energy used to raising the temperature of the saline solution to be desalinated, which is supplied to the first effect, so that the reducing effect on the GOR of the device caused by the energy used to increasing the temperature of the saline solution supplied to the first effect, top brine temperature, is decreased.
- The desalination arrangement has at least one thermocompressor 12 or ejector that uses a vapour source 1 as active vapour. The thermocompressor 12 pulls vapour from the last effect to generate the vapour 13 that is supplied to the first effect. The vapour 13 generated by the thermocompressor 12 will have a pressure equal to the equilibrium vapor pressure of the working temperature of the first effect. Reducing the working temperature of the first effect reduces the working pressure of the first effect, which reduces the compression ratio, that is, the ratio between the pressure of the first effect and the pressure of the last effect.
- The desalination arrangement uses the reduction of the compression ratio to reduce the specific consumption of active vapour per unit of mass of vapour pulled from the ejector. The relationship between the reduction of the compression ratio and the reduction of the specific vapour consumption is not a linear relationship. The significant reduction in the temperature gradient from the current level ranging from 3°C to 5°C per effect, to levels around 1°C per effect, allows a significant reduction in the working pressure of the first effect and a significant reduction in the compression ratio. The current compression ratio between 70°C and 35°C is around 6, while with the MED-TVC desalination arrangement having a low compression ratio, the compression ratio is around 1+ 0.08 (n-1) for n effects, or less. In other words, the compression ratio is located graphically in the most vertical area of the logarithmic curve of the relationship between the compression ratio and the specific consumption of active vapour, which means that a small reduction in the compression ratio involves a proportionally greater reduction in the specific vapour consumption.
- The low specific vapour consumption allows a high recycling of the vapour of the last effect, which produces a multiplier effect of the GOR of the device. This multiplier effect of the GOR by reduction of the specific consumption of active vapour is not linear with the reduction of the temperature difference per effect, since it follows a logarithmic-like function. This phenomenon limits the growth of the number of effects as a factor to increase the GOR of the device. Adding one more effect adds one more temperature gradient, which implies an increase between the working temperature and pressure of the first effect and those of the last effect, which implies an increase in the compression ratio and the displacement along of the curve to areas of higher specific vapour consumption, which progressively penalizes the specific vapour consumption until reaching a point where the addition of one more effect leads to an increase in GOR below 1. Depending on the availability of financial and energy resources and depending on the objectives of production of desalinated water and energy saving, the MED-TVC desalination arrangement having a low compression ratio has sufficient design flexibility to be able to combine the optimal level for each case of number of effects and coefficient of compression to obtain the resulting production and GOR according to the needs and capacities of the user. The number of effects will tend to be less than a level of around 15 effects because above this number of effects, the addition of one more effect tends to lead to less and less GOR growth until reaching a point where the addition of one effect results in a GOR with an increase below 1 as a result of the more than linear increase in specific vapour consumption.

An embodiment of the MED-TVC desalination arrangement having a low compression ratio is with 10 effects, n = 10, and a temperature differential, per effect, of 1°C and a vapour source at 70°C. The thermocompressor 12 uses the energy source 1 in the form of vapour at 70°C as active vapour with which it pulls vapour 11 from the last effect, to generate vapour 13 that is supplied to the first effect. For a vapour of the last effect 15 with a temperature around 35°C, and a vapour 13 supplied to the first effect at around 45°C, this configuration has a compression ratio of around 1.7. The specific vapour consumption is approximately 1 kg of active vapour 1 at about 70°C for each kg of vapour 11 pulled at around 35 °C, which makes it possible to provide about 2 kg of vapour 13 at about 45 °C to the first effect, so that for each kilo of active vapour from the available vapour source 1 that can be supplied to a state-of-the-art MED, with a MED-TVC desalination arrangement having a low compression ratio, 2 kg, or more, of active vapour 13 are supplied to the first effect, and the condensation capacity of distilled water per effect is doubled, or more, since 50% or more of the vapour from the last effect is recycled, instead of being poured entirely into the final sink as occurs with current MED devices. The result of this configuration, without taking into account losses of operation and heating of the water; is that for every kilo of active vapour supplied to the system, approximately two kilos, or more, of vapour arrive at the first effect, which condenses and evaporates ten times throughout the ten effects, that is, about 20 kg of distilled water are obtained for every kg of active vapour provided. And since it works at very low temperatures, the losses related to heating the water between 35°C and 45°C are also low. While without the multiplier factor of the low compression ratio ejector, the vapour supplied to the first effect would only be recycled about ten times over the ten effects minus the losses due to energy transfers.

This embodiment can be implemented in a newly built desalination plant or can be implemented in an upgrade of a pre-existing state-of-the-art MED arrangement. In the case of applying a multi-effect distillation MED desalination arrangement with thermal-vapour compression, MED-TVC, having a low compression ratio to improve a state-of-the-art MED installation in which the energy source is maintained, the sink is maintained, the heat exchangers are replaced, the existing shells are maintained, a vapour thermal ejector or compressor having a low compression ratio, around 1 + 0.08 (n-1), with n being the number of effects, is added between the first and the last effect, the fluid ducts are adapted to the new flow rates, the temperature jump per effect is reduced to around one third or less than one third of the pre-existing temperature jump, the temperature differential between the first effect and the last effect is reduced to around one third or less than one third, compared to the pre-existing temperature jump, the temperature of the first effect is reduced and a multiple of around 2, or greater than 2, is achieved as regards the quantity of water produced and it is possible to reduce to half, or less than half, the specific energy consumption per unit of desalinated water produced.

Given the high coefficient of latent heat transfer of latent heat exchange plates or tubes, an embodiment of the desalination arrangement can be designed with a temperature gradient, per effect, below 1°C. In this case, the compression ratio decreases, the specific consumption of vapour decreases and the vapor recycling of the last effect becomes more than 50%, so that the production capacity of desalinated water is multiplied by more than 2 times and the energy cost per unit of desalinated water is reduced to less than half.

Another embodiment of the MED-TVC desalination arrangement having a low compression ratio is with 10 effects, with a temperature differential, per effect, of 1°C and a 3 bar vapour source, which is a vapour source compatible with MED-TVC of the state of the art. The thermocompressor 12 uses the energy source 1 in the form of vapour at 3 bars as active vapour and pulls vapour 11 from the last effect to generate vapour 13 that is supplied to the first effect. For a vapour from the last effect 15 at a temperature of around 35°C, and a vapour 13 supplied to the first effect at about 45°C, this configuration allows a compression ratio of approximately 1.7 and a specific vapour consumption of approximately 0.65 kg of active vapour 1 at about 3 bars per kg of vapour at around 35°C pulled 11.

Thus some 1.65 kg of vapour 13 is provided at about 45°C for the first effect. In a state-of-the-art MED-TVC with vapour at a temperature of 70°C in the first effect, the compression ratio is around 6 and the specific vapour consumption is 4 kg of active vapour per kg of vapour pulled, while because of the reduction of the compression ratio to levels of 1.7 with the described embodiment of a MED-TVC having a low compression ratio, the specific consumption of vapour becomes about 0.65 kg of active vapour per kilogram of vapour pulled, or what is the same, 4 kg of active vapour for every 6 kg of vapour pulled, so that the total vapour supplied in each effect is about 10 kg of vapour for every 4 kg of active vapour provided by source 1. In other words, with this configuration of a MED-TVC desalination arrangement having a low compression ratio, an additional 50% of the last-effect vapour is recycled compared to what a state-of-the-art MED-TVC can recycle, so that a MED-TVC desalinizing arrangement with a low compression ratio allows doubling, or more than doubling, the amount of condensed vapour per effect compared to the amount of vapour that is condensed per effect in a state-of-the-art MED-TVC per unit of active vapour supplied by a given vapour source 1.

This embodiment can be implemented in a newly-built desalination plant or can be implemented to improve a pre-existing state-of-the-art MED-TVC arrangement. In the case of the application of a multi-effect distillation MED desalination arrangement with thermal-vapour compression, MED-TVC, having a low compression ratio for improving a state-of-the-art MED-TVC installation in which the energy source is maintained, the heat sink is maintained, the heat exchangers are replaced, the existing shells are maintained, the ejector or thermal vapour compressor is adapted or replaced so that an ejector having a low compression ratio, around 1 +0.08 (n-1) where n is the number of effects, is installed between the first effect and the last effect, the fluid lines are adapted to the new flow rates, the temperature jump per effect is reduced, which becomes around one third or less than one third of the pre-existing temperature jump, the temperature differential between the first effect and the last effect is reduced, which becomes around one third or less than one third of the pre-existing temperature jump, the temperature of the first effect is reduced and a multiple of around 2, or more than 2, of the amount of water produced is achieved, and it is possible to reduce to half or less than half the specific energy consumption per unit of desalinated water produced.

A multi-effect distillation MED desalination arrangement with thermal compression, MED-TVC, having a low compression ratio has a limit on the number of effects from which the addition of one effect supposes an increase of the GOR below 1. This limit is due to the non-linear relationship between the increase in the compression ratio and the increase in the specific consumption of vapour of the ejector. Therefore, depending on the priorities of quantity of production, GOR and the availability of land and capital, from this limit on the number of effects it is possible to choose to allot the capital to the construction of another desalination arrangement of multi-effect distillation MED with thermal-vapour compression MED-TVC having a low compression ratio.

In one embodiment of a desalination arrangement of multi-effect distillation MED with thermal-vapour compression MED-TVC having a low compression ratio as described above for 10 effects with a 3 bar vapour source, we have described that the result of this configuration, without taking into account losses in the operation and heating of the water, is that for each kilo of active vapour supplied to the system, around 2.5 kg of vapour are supplied at the first effect, which condenses and evaporates ten times throughout the ten effects, that is to say that 25 kg of distilled water are achieved per each kg of active vapour supplied. And since it works at very low temperatures, the losses related to water heating are also low. But if instead of an embodiment with 10 effects, we consider an embodiment with 15 effects and 1°C of temperature gradient per effect, then the temperature of the first effect would be 50°C and the compression ratio between the vapor of the first effect at 50°C and the last effect at 35 °C would be approximately 2.2 and the specific vapour consumption would be around 1.2 kg of active vapour for each kg of pulled vapour. In other words, for each kilo of active vapour supplied to the system, 1.8 kg of vapour arrives at the first effect, which, by going through 15 condensation cycles over 15 effects, produces 27 kg of desalinated water without considering the losses of the system. When comparing a multiplier of 25 for 12 effects with a multiplier of 27 for 15 effects, CAPEX does not seem justified for three additional effects if only an increase in desalinated water equivalent to 2 additional condensations is achieved. This result is due to the penalty suffered by the specific vapour consumption when the compression ratio rises above 2, given the logarithmic curve of the relationship between compression ratio and specific vapour consumption. This logarithmic-type relationship between compression ratio and specific ejector consumption implies that the MED-TVC desalination arrangement having a low compression ratio has a ratio or quotient between the GOR of the arrangement and the number of effects that decreases as the number of effects increases. Likewise, this ratio between the GOR and the number of effects increases strongly when descending in the most vertical area of the curve between compression ratio and specific vapour consumption, that is, as the compression ratio is reduced, reaching the maximum level in the case of a two-effect MED-TVC arrangement, that is, a latent heat exchanger and a sink, for which the compression ratio can be around 1.06 and the specific consumption of active vapour is drastically reduced per mass unit of pulled vapour sucked. We can observe that for the different configurations of the MED-TVC desalination arrangement, the best fit relationship between its number of effects n and its compression ratio is around 1 + 0.08 (n-1) or less, n-1 being the number of effects minus the last effect where the sink is located and the suction of part of the final vapour. Similarly, we observe that if an ejector is inserted between two effects, other than between the first and the last, the best fit compression ratio is around 1 + 0.08x where x is the number of effects between which the ejector is installed.

The MED-TVC desalination arrangement having a low compression ratio can be implemented for newly-built plants or to improve the performance of pre-existing MED or MED-TVC plants.

The MED-TVC desalination arrangement having a low compression ratio can be used to desalinate seawater, brackish water or other types of saline solutions.

## Claims

1. Multi-effect distillation (MED) desalination arrangement with thermal vapour compression (MED-TVC) having a low compression ratio, **characterized in that** it comprises:
a plurality of interconnected effects, wherein each interconnected effect comprises a latent heat exchanger (14) that comprises at least one evaporator-condenser tube or chamber having an evaporating face that is covered, at least in part, by microgrooves or microrecesses, the microgrooves or microrecesses being configured to allow a saline solution to be desalinated to flow through them forming saline solution menisci (16) in the microgrooves or micro-recesses such that water vapour evaporates from the ends of the menisci (16) and a condensing face that is covered, at least in part, by microgrooves or other capillary structure, the microgrooves or other capillary structure being configured to allow water vapour to condense in capillary condensation regime on the microgrooves or other capillary structure such that water menisci (18) are formed therein; and
at least one thermocompressor or ejector (12) configured to suck water vapour (15) from one effect of the plurality of interconnected effects and provide the water vapour (13) to another previous effect of the plurality of interconnected effects, the at least one thermocompressor or ejector (12) having a compression ratio that is equal to or less than '1 + 0.08*(n-1)', with 'n' being the number of effects of the plurality of effects, the compression ratio resulting from the decrease in temperature and working pressure of the first effect of the plurality of interconnected effects,
wherein the supply of the saline solution to be desalinated on the evaporating face is made inside the microgrooves or micro-recesses without forming thin water films;
wherein a wall section of the evaporator-condenser tubes or chambers has the shape of a continuous broken zigzag, crenellated or wavy line and is configured to have a thermal path (17) between the point of condensation on the water menisci (18) where the condensation latent heat is released and the upper ends of the saline solution menisci (16) where evaporation occurs and absorption of evaporation latent heat takes place, that is free of water layers,
wherein the latent heat exchangers (14) are configured to have a heat transfer coefficient that allows a condensation and evaporation cycle to be carried out, per effect, with a thermal jump of 0.8°C, or less, plus a temperature difference due to a boiling point elevation of the saline solution; and
wherein the first effect of the plurality of effects has a working temperature below 70°C which corresponds to the working temperature of a last effect of the plurality of effects plus a thermal jump per effect multiplied by the number of effects of the plurality of effects.

2. The arrangement according to claim 1, **characterized in that** the arrangement comprises a number of effects that is smaller than the number of effects from which an additional effect in the arrangement implies an increase of Gained Output Ratio (GOR) smaller than 1.

3. The arrangement according to claim 2, **characterized in that** the arrangement comprises 15 effects.

4. The arrangement according to claim 1, **characterized in that** the at least one thermocompressor or ejector (12) is configured for a specific vapour consumption of about 1 kg or less of active vapour, for each kilogram of vapour sucked from the last effect of the plurality of effects.

5. The arrangement according to claim 1, **characterized in that** the thermocompressor or ejector (12) is configured to suck half, or more than half, the vapour mass of the last effect of the plurality of effects, so as to recycle half or more than half of the latent heat that flows through the arrangement.

6. The arrangement according to claim 1, **characterized in that** the thermocompressor or ejector (12) is configured to recycle the vapour between two effects of the plurality of effects, other than the last and the first effects, separated by a number 'x' effects and with a compression ratio of around '1 + 0.08x'.

7. The arrangement according to claim 4, **characterized in that** it is applied for improving or updating a pre-existing MED plant.

8. The arrangement according to claim 5, **characterized in that** it is applied for improving or updating a pre-existing MED-TVC plant.

9. A method for desalinating a saline solution that makes use of a multi-effect distillation (MED) desalination arrangement as defined in claim 1 with thermal vapour compression (MED-TVC) having a low compression ratio, the MED distillation arrangement comprising a plurality of interconnected effects, wherein a latent heat exchanger (14) of each effect comprises at least one evaporator-condenser tube or chamber whose evaporating face is covered, at least in part, by microgrooves or microrecesses, and whose condensing face is covered, at least in part, by microgrooves or other capillary structure, and at least one thermocompressor or ejector (12) having a compression ratio that is equal to or less than '1 + 0.08*(n-1)', with 'n' being the number of effects of the plurality of effects, the method comprising:
supplying the saline solution to be desalinated through the microgrooves or microrecesses of the evaporating face of the latent heat exchanger (14) forming menisci (16) in the microgrooves or microrecesses such that the saline solution is evaporated from the ends of the menisci (16), the saline solution being supplied inside the microgrooves or microrecesses without forming thin water films;
supplying water vapour on the condensing face of the latent heat exchanger such that water vapour condensates in capillary condensation regime in the microgrooves or other capillary structure of the condensing face forming menisci (18) therein;
sucking, by the at least one thermocompressor or ejector (12), water vapour (15) from one effect of the plurality of interconnected effects;
providing, by the at least one thermocompressor or ejector (12), the water vapour (13) to another previous effect of the plurality of interconnected effects, the compression ratio of the MED desalination arrangement resulting from the decrease in temperature and working pressure of the first effect of the plurality of effects;
wherein a wall section of the evaporator-condenser tubes or chambers (14) has the shape of a continuous broken zigzag, crenellated or wavy line and has a thermal path (17), between the point of condensation on the water menisci (18) where the condensation latent heat is released and the upper ends of the saline solution menisci (16) where evaporation occurs and absorption of evaporation latent takes place, is free of water layers, that is free of water layers;
wherein the latent heat exchangers (14) have a heat transfer coefficient that allows a condensation and evaporation cycle to be carried out, per effect, with a thermal jump of 0.8°C, or less, plus a temperature difference due to a boiling point elevation of the saline solution; and
wherein a working temperature of the first effect of the plurality of effects is below 70°C and corresponds to the working temperature of a last effect of the plurality of effects plus a thermal jump per effect multiplied by the number of effects of the plurality of effects.

## Patentansprüche

1. Multi-Effekt-Destillations-(MED-)Entsalzungsanordnung mit thermischer Dampfkompression (MED-TVC) mit niedrigem Kompressionsverhältnis, **dadurch gekennzeichnet, dass** sie Folgendes umfasst:
eine Vielzahl miteinander verbundener Effekte, wobei jeder miteinander verbundene Effekt einen Latentwärmetauscher (14) umfasst, der mindestens ein Verdampfer-Kondensator-Rohr oder -Kammer mit einer Verdampfungsfläche umfasst, die zumindest teilweise mit Mikrorillen oder Mikroaussparungen bedeckt ist, wobei die Mikrorillen oder Mikroaussparungen so konfiguriert sind, dass eine salzhaltige Lösung, die entsalzt werden soll, durch sie hindurchfließen kann, wobei sich in den Mikrorillen oder Mikroaussparungen Salzlösungsmenisken (16) bilden, so dass Wasserdampf von den Enden der Menisken (16) verdampft, und eine Kondensationsfläche, die zumindest teilweise von Mikrorillen oder einer anderen Kapillarstruktur bedeckt ist, wobei die Mikrorillen oder die andere Kapillarstruktur so konfiguriert sind, dass Wasserdampf in einem Kapillarkondensationsregime auf den Mikrorillen oder der anderen Kapillarstruktur kondensieren kann, so dass sich darin Wassermenisken (18) bilden; und
mindestens einen Thermokompressor oder Ejektor (12), der so konfiguriert ist, dass er Wasserdampf (15) von einem Effekt der Vielzahl miteinander verbundener Effekte absaugt und den Wasserdampf (13) einem anderen vorherigen Effekt der Vielzahl miteinander verbundener Effekte zuführt, wobei der mindestens eine Thermokompressor oder Ejektor (12) ein Kompressionsverhältnis aufweist, das gleich oder kleiner als '1 + 0,08*(n-1)' ist, wobei 'n' die Anzahl der Effekte der Vielzahl der Effekte ist, wobei das Kompressionsverhältnis aus der Abnahme der Temperatur und des Arbeitsdrucks des ersten Effekts der Vielzahl miteinander verbundener Effekte resultiert,
wobei die Zufuhr der zu entsalzenden Salzlösung auf der Verdampfungsseite innerhalb der Mikrorillen oder Mikroaussparungen ohne Bildung von Wasserfilmen erfolgt;
wobei ein Wandabschnitt der Verdampfer-Kondensator-Rohre oder -Kammern die Form einer kontinuierlichen unterbrochenen Zickzack-, Zinnen- oder Wellenlinie aufweist und so konfiguriert ist, dass er einen thermischen Pfad (17) zwischen dem Kondensationspunkt auf den Wassermenisken (18), wo die latente Kondensationswärme freigesetzt wird, und den oberen Enden der Salzlösungsmenisken (16) aufweist, wo die Verdampfung stattfindet und die Absorption der latenten Verdampfungswärme stattfindet, der frei von Wasserschichten ist,
wobei die Latentwärmetauscher (14) so konfiguriert sind, dass sie einen Wärmeübertragungskoeffizienten aufweisen, der es ermöglicht, einen Kondensations- und Verdampfungszyklus pro Effekt mit einem Temperatursprung von 0,8 °C oder weniger plus einer Temperaturdifferenz aufgrund einer Siedepunkterhöhung der Salzlösung durchzuführen; und
wobei der erste Effekt der Vielzahl von Effekten eine Arbeitstemperatur unter 70°C aufweist, die der Arbeitstemperatur eines letzten Effekts der Vielzahl von Effekten zuzüglich eines Wärmesprungs pro Effekt multipliziert mit der Anzahl der Effekte der Vielzahl von Effekten entspricht.

2. Anordnung nach Anspruch 1, **dadurch gekennzeichnet, dass** die Anordnung eine Anzahl von Effekten aufweist, die kleiner ist als die Anzahl von Effekten, von denen ein zusätzlicher Effekt in der Vereinbarung eine Erhöhung der Gained Output Ratio (GOR) von weniger als 1 impliziert.

3. Anordnung nach Anspruch 2, **dadurch gekennzeichnet, dass** die Anordnung 15 Effekte aufweist.

4. Anordnung nach Anspruch 1, **dadurch gekennzeichnet, dass** der mindestens eine Thermokompressor oder Ejektor (12) für einen spezifischen Dampfverbrauch von etwa 1 kg oder weniger Aktivdampf für jedes Kilogramm Dampf konfiguriert ist, das von dem letzten der Mehrzahl von Effekten abgesaugt wird.

5. Anordnung nach Anspruch 1, **dadurch gekennzeichnet, dass** der Thermokompressor oder Ejektor (12) so konfiguriert ist, dass er die Hälfte oder mehr als die Hälfte der Dampfmasse des letzten Effekts der Vielzahl von Effekten absaugt, um die Hälfte oder mehr als die Hälfte der latenten Wärme, die durch die Anordnung fließt, zu recyceln.

6. Anordnung nach Anspruch 1, **dadurch gekennzeichnet, dass** der Thermokompressor oder Ejektor (12) so konfiguriert ist, dass er den Dampf zwischen zwei Effekten der Vielzahl von Effekten, die von dem letzten und dem ersten Effekt verschieden sind, durch eine Anzahl 'x' von Effekten getrennt und mit einem Verdichtungsverhältnis von etwa '1+0,08x' sind, rezykliert.

7. Anordnung nach Anspruch 4, **dadurch gekennzeichnet, dass** sie zur Verbesserung oder Erneuerung einer bereits bestehenden MED-Anlage eingesetzt wird.

8. Anordnung nach Anspruch 5, **dadurch gekennzeichnet, dass** sie zur Verbesserung oder Aktualisierung einer bereits existierenden MED-TVC-Anlage eingesetzt wird.

9. Verfahren zur Entsalzung einer Salzlösung, bei dem Multi-Effekt-Destillations-(MED-)Entsalzungsanordnung nach Anspruch 1 mit thermischer Dampfkompression (MED-TVC) mit einem niedrigen Kompressionsverhältnis verwendet wird, wobei die MED-Destillationsanordnung eine Vielzahl von miteinander verbundenen Effekten, wobei ein Latentwärmetauscher (14) jedes Effekts mindestens ein Verdampfer-Kondensator-Rohr oder -Kammer umfasst, deren Verdampfungsfläche zumindest teilweise abgedeckt ist durch Mikrorillen oder Mikroaussparungen und deren Kondensationsfläche zumindest teilweise durch Mikrorillen oder eine andere Kapillarstruktur bedeckt ist, und mindestens einen Thermokompressor oder Ejektor mit einem Kompressionsverhältnis, das gleich oder kleiner als '1 + 0,08*(n-1)' ist, wobei 'n' die Anzahl der Effekte der Vielzahl von Effekten ist, aufweist, wobei das Verfahren umfasst:
Zuführen der zu entsalzenden Salzlösung den Mikrorillen oder Mikroaussparungen der Verdunstungsfläche des Latentwärmetauschers (14), wodurch Menisken (16) in den Mikrorillen oder Mikrorillenvertiefungen gebildet werden, so dass die Salzlösung von den Enden der Menisken (16) verdunstet wird, wobei die Salzlösung in die Mikrorillen oder Mikroaussparungen zugeführt wird, ohne dünne Wasserfilme zu bilden;
Zuführen von Wasserdampf auf der Kondensationsfläche des Latentwärmetauschers, so dass Wasserdampf im Kapillarkondensationsregime in den Mikrorillen oder der anderen Kapillarstruktur der Kondensationsfläche kondensiert und darin Menisken (18) bildet;
Absaugen von Wasserdampf (15) aus einem Effekt der Vielzahl miteinander verbundener Effekte durch den mindestens einen Thermokompressor oder Ejektor (12);
Bereitstellung des Wasserdampfes durch den mindestens einen Thermokompressor oder Ejektor (12) zu einem anderen vorhergehenden Effekt der Vielzahl der miteinander verbundenen Effekte, wobei sich das Kompressionsverhältnis der MED-Entsalzungsanordnung aus der Abnahme der Temperatur und des Arbeitsdrucks des ersten Effekts aus der Vielzahl der Effekte ergibt;
wobei ein Wandabschnitt der Verdampfer-Kondensator-Rohre oder -Kammern (14) die Form einer kontinuierlichen unterbrochenen Zickzack-, Zinnen- oder Wellenlinie hat und einen thermischen Pfad (17) zwischen dem Kondensationspunkt auf den Wassermenisken (18), wo die latente Kondensationswärme freigesetzt wird, und den oberen Enden der Salzlösungsmenisken (16), wo die Verdunstung stattfindet und die Absorption der Verdunstungslatenz erfolgt, hat, der frei von Wasserschichten ist, also frei von Wasserschichten ist;
wobei die Latentwärmetauscher (14) einen Wärmeübergangskoeffizienten aufweisen, der es ermöglicht, einen Kondensations- und Verdampfungszyklus pro Effekt mit einem Temperatursprung von 0,8 °C oder weniger plus einer Temperaturdifferenz aufgrund einer Siedepunkterhöhung der Salzlösung durchzuführen, und
wobei eine Arbeitstemperatur des ersten Effekts der Vielzahl von Effekten unter 70°C liegt und der Arbeitstemperatur eines letzten Effekts der Vielzahl von Effekten plus einem Wärmesprung pro Effekt multipliziert mit der Anzahl der Effekte der Vielzahl von Effekten entspricht.

## Revendications

1. Agencement de dessalement par distillation à effets multiples (MED) avec compression thermique de vapeur (MED-TVC) ayant un faible taux de compression, **caractérisé en ce qu'**il comprend :
une pluralité d'effets interdépendants, dans lequel chaque effet interdépendant comprend un échangeur de chaleur latente (14) qui comprend au moins un tube ou une chambre d'évaporateur-condenseur ayant une face d'évaporation qui est recouverte, au moins en partie, par des micro-rainures ou des micro-cavités, les micro-rainures ou micro-cavités étant configurées pour permettre à une solution saline devant être dessalée de circuler à travers celles-ci en formant des ménisques (16) de solution saline dans les micro-rainures ou micro-cavités de sorte que de la vapeur d'eau s'évapore des extrémités des ménisques (16) et une face de condensation qui est recouverte, au moins en partie, par des micro-rainures ou une autre structure capillaire, les micro-rainures ou l'autre structure capillaire étant configurées pour permettre à de la vapeur d'eau de se condenser en régime de condensation capillaire sur les micro-rainures ou l'autre structure capillaire de sorte que des ménisques (18) d'eau soient formés en leur sein ; et
au moins un thermocompresseur ou éjecteur (12) configuré pour aspirer de la vapeur d'eau (15) provenant d'un effet de la pluralité d'effets interdépendants et fournir la vapeur d'eau (13) à un autre effet précédent de la pluralité d'effets interdépendants, l'au moins un thermocompresseur ou éjecteur (12) ayant un taux de compression qui est égal ou inférieur à « 1 + 0,08 * (n-1) », « n » étant le nombre d'effets de la pluralité d'effets, le taux de compression résultant de la diminution en température et en pression de travail du premier effet de la pluralité d'effets interdépendants,
dans lequel l'apport de la solution saline devant être dessalée sur la face d'évaporation est effectuée à l'intérieur des micro-rainures ou micro-cavités sans former des films d'eau minces ;
dans lequel une section de paroi des tubes ou chambres d'évaporateur-condenseur se présente sous la forme d'une ligne continue brisée en zigzag, crénelée ou ondulée et est configurée pour posséder un chemin thermique (17) entre le point de condensation sur les ménisques (18) d'eau où la chaleur latente de condensation est libérée et les extrémités supérieures des ménisques (16) de solution saline où une évaporation se produit et une absorption de chaleur latente d'évaporation a lieu, qui est exempt de couches d'eau,
dans lequel les échangeurs de chaleur latente (14) sont configurés pour posséder un coefficient de transfert de chaleur qui permet à un cycle de condensation et d'évaporation d'être effectué, par effet, avec un saut thermique de 0,8 °C ou moins, plus une différence de température due à une élévation de point d'ébullition de la solution saline ; et
dans lequel le premier effet de la pluralité d'effets possède une température de travail au-dessous de 70 °C qui correspond à la température de travail d'un dernier effet de la pluralité d'effets plus un saut thermique par effet multiplié par le nombre d'effets de la pluralité d'effets.

2. Agencement selon la revendication 1, **caractérisé en ce que** l'agencement comprend un nombre d'effets qui est plus petit que le nombre d'effets à partir duquel un effet additionnel dans l'agencement implique une augmentation du rendement normalisé gagné (GOR) plus petit que 1.

3. Agencement selon la revendication 2, **caractérisé en ce que** l'agencement comprend 15 effets.

4. Agencement selon la revendication 1, **caractérisé en ce que** l'au moins un thermocompresseur ou éjecteur (12) est configuré pour une consommation spécifique de vapeur d'environ 1 kg ou moins de vapeur active, pour chaque kilogramme de vapeur aspirée à partir du dernier effet de la pluralité d'effets.

5. Agencement selon la revendication 1, **caractérisé en ce que** le thermocompresseur ou l'éjecteur (12) est configuré pour aspirer la moitié, ou plus de la moitié, de la masse de vapeur du dernier effet de la pluralité d'effets, de façon à recycler la moitié ou plus de la moitié de la chaleur latente qui circule à travers l'agencement.

6. Agencement selon la revendication 1, **caractérisé en ce que** le thermocompresseur ou l'éjecteur (12) est configuré pour recycler la vapeur entre deux effets de la pluralité d'effets, autres que le dernier et le premier effet, séparés d'un nombre « x » d'effets et avec un taux de compression d'environ « 1 + 0,08x ».

7. Agencement selon la revendication 4, **caractérisé en ce qu'**il est appliqué pour l'amélioration ou la modernisation d'une installation de MED préexistante.

8. Agencement selon la revendication 5, **caractérisé en ce qu'**il est appliqué pour l'amélioration ou la modernisation d'une installation de MED-TVC préexistante.

9. Procédé de dessalement d'une solution saline qui fait usage d'un agencement de dessalement par distillation à effets multiples (MED) tel que défini selon la revendication 1 avec compression thermique de vapeur (MED-TVC) ayant un faible taux de compression, l'agencement de distillation MED comprenant une pluralité d'effets interdépendants, dans lequel un échangeur de chaleur latente (14) de chaque effet comprend au moins un tube ou une chambre d'évaporateur-condenseur dont une face d'évaporation est recouverte, au moins en partie, par des micro-rainures ou des micro-cavités, et dont une face de condensation est recouverte, au moins en partie, par des micro-rainures ou une autre structure capillaire, et au moins un thermocompresseur ou éjecteur ayant un taux de compression qui est égal ou inférieur à « 1 + 0,08 * (n-1) », « n » étant le nombre d'effets de la pluralité d'effets, le procédé comprenant les étapes consistant à :
apporter la solution saline devant être dessalée à travers les micro-rainures ou micro-cavités de la face d'évaporation de l'échangeur de chaleur latente (14) en formant des ménisques (16) dans les micro-rainures ou micro-cavités de sorte que la solution saline s'évapore des extrémités des ménisques (16), la solution saline étant apportée à l'intérieur des micro-rainures ou micro-cavités sans former des films d'eau minces ;
apporter de la vapeur d'eau sur la face de condensation de l'échangeur de chaleur latente de sorte que de la vapeur d'eau se condense en régime de condensation capillaire dans les micro-rainures ou l'autre structure capillaire de la face de condensation en formant des ménisques (18) en leur sein ;
aspirer, par l'au moins un thermocompresseur ou éjecteur (12), de la vapeur d'eau (15) provenant d'un effet de la pluralité d'effets interdépendants ;
fournir, par l'au moins un thermocompresseur ou éjecteur (12), la vapeur d'eau à un autre effet précédent de la pluralité d'effets interdépendants, le taux de compression de l'agencement de distillation MED résultant de la diminution en température et en pression de travail du premier effet de la pluralité d'effets ;
dans lequel une section de paroi des tubes ou chambres (14) d'évaporateur-condenseur se présente sous la forme d'une ligne continue brisée en zigzag, crénelée ou ondulée et possède un chemin thermique (17), entre le point de condensation sur les ménisques (18) d'eau où la chaleur latente de condensation est libérée et les extrémités supérieures des ménisques (16) de solution saline où l'évaporation se produit et l'absorption de chaleur latente d'évaporation a lieu, est exempt de couches d'eau, qui est exempt de couches d'eau ;
dans lequel les échangeurs de chaleur latente (14) possèdent un coefficient de transfert de chaleur qui permet à un cycle de condensation et d'évaporation d'être effectué, par effet, avec un saut thermique de 0,8 °C ou moins, plus une différence de température due à une élévation de point d'ébullition de la solution saline ; et
dans lequel une température de travail du premier effet de la pluralité d'effets est au-dessous de 70 °C et correspond à la température de travail d'un dernier effet de la pluralité d'effets plus un saut thermique par effet multiplié par le nombre d'effets de la pluralité d'effets.
